# EUROPÄISCHE PATENTSCHRIFT

(11) **EP 1 046 889 B1**
(45) Veröffentlichungstag und Bekanntmachung des Hinweises auf die Patenterteilung: **02.08.2006**
(21) Anmeldenummer: 00105212.5
(22) Anmeldetag: 13.03.2000
(51) Int. Cl.: G01G 23/00, G01G 21/23

(54) **Modul zur Aufnahme einer Wägezelle**
Module for receiving a load cell
Bloc pour loger une cellule de charge

(30) Priorität: 22.04.1999 DE 19918408
(43) Veröffentlichungstag der Anmeldung: 25.10.2000
(73) Patentinhaber: Hottinger Baldwin Messtechnik GmbH, 64293 Darmstadt (DE)
(72) Erfinder: Bäumel, Helmut, 64367 Mühltal (DE); Müter, Johannes, 64625 Bensheim (DE)
(74) Vertreter: Behrens, Helmut

(56) Entgegenhaltungen:
- EP-A- 0 076 616
- EP-A- 0 327 517
- DE-U- 9 304 804
- US-A- 3 997 014

## Beschreibung

Die Erfindung betrifft ein Modul zur Aufnahme einer Wägezelle gemäß dem Oberbegriff des Patentanspruchs 1.

Im verarbeitenden Gewerbe und Industrie ist es häufig notwendig, daß der Inhalt oder das Gewicht von Behältern, Silos, Trichtern oder anderer zu wiegender Geräte ermittelt wird. Dabei werden diese Geräte meist auf drei Wägezellen gelagert und damit kann deren Gewicht oder Inhalt bzw. dessen Durchlaufmenge ermittelt werden. Da derartige Behälter oder Geräte oft im Freien aufgestellt werden, sind sie unterschiedlichen Umgebungseinflüssen ausgesetzt, die das Wägeergebnis verfälschen können. So wirken auf derartige Behälter und Geräte oft erhebliche Windkräfte ein, die den Behälter seitlich bewegen. Weiterhin wirken auf diese Behälter verschiedene Umgebungstemperaturen ein, die zu erheblichen Wärmeausdehnungen an den Behältern führen. Dadurch werden erhebliche Wärmeausdehnungskräfte und Kippmomente entwickelt, die das Meßergebnis erheblich beeinflussen können. Deshalb müssen die Behälter und Geräte so auf den Wägezellen gelagert werden, daß diese horizontal und vertikal beweglich sind, damit keine Störkräfte auf die Wägezellen wirken. Gleichzeitig müssen die Behälter auf den Wägezellen aber auch so gelagert werden, daß diese nicht umfallen und horizontal nicht in ihrer Lage verschoben werden. Um dies in der Praxis zu gewährleisten sind Wägezellenmodule bekannt, in der die Wägezellen fertig installiert sind und die die zu wiegenden Behälter oder Geräte in vertikaler und horizontaler Richtung fesseln.

Ein derartiges Wägezellenmodul ist aus dem Firmenprospekt "Einbauzubehör für Wägeanlagen mit Ringtorsions-Wägezellen", D4152, Ausgabe September 1992 der Carl Schenck AG in Darmstadt, vorbekannt. Dort ist ein Wägezellenmodul als Elastomer-Lagereinheit offenbart, das aus zwei parallel angeordneten Montageplattformen besteht, zwischen denen eine Biegering-Wägezelle angeordnet ist. Seitlich neben der Wägezelle sind zwei v-förmige Anschlagbleche mit seitlichem Abstand voneinander vorgesehen. Dabei ist ein Anschlagblech an der oberen Montageplattform und das andere Anschlagblech an der unteren Montageplattform angeschweißt. In das mit der oberen Montageplattform verbundene Anschlagblech sind seitlich zwei Gewindestangen eingedreht, durch die ein bestimmter seitlicher Anschlagweg einstellbar ist, um den die obere Plattform in eine Richtung gegen die untere Plattform verschoben werden kann. Weiterhin ist eine Abhebesicherung vorgesehen, die aus einer in der oberen Plattform befestigten vertikalen Gewindestange besteht, die durch ein an dem unteren Anschlagblech befestigten horizonalen Blech geführt ist. Der vertikale Bewegungsbereich ist dabei durch zwei Kontermuttern auf der Gewindestange einstellbar. Bei einem derartigen Wägezellenmodul ist nachteilig, daß zur Einstellung der Anschlagwege relativ viel Einstell-und Montageaufwand erforderlich ist.

Aus der US-A-3.997.014 ist eine Montage- und Schutzvorrichtung bei Kraftmess- oder Wiegevorrichtungen bekannt, bei der eine Pendelstabwägezelle zwischen einem Unterteil und einer dazu parallelen Konsole angeordnet ist. Auf dem Unterteil sind zusätzlich noch zwei vertikal angeordnete Säulen befestigt, die an ihrem oberen Ende zwei vertikale Zapfen aufweisen. Dabei greifen die beiden Zapfen in zwei vertikale Bohrungen in der Konsole ein, wobei zwischen dem Zapfen und den Bohrungen ein Spiel belassen wurde, das eine horizontale Bewegung der Konsole ermöglicht. Dabei ist nur eine begrenzte horizontale Verschiebung durch das Spiel vorgesehen, durch die eine unzulässige Seitenlast direkt in das Unterteil übertragen wird. Da die Konsole nur lose auf der Wägezelle aufliegt und nur durch die Belastung mit einer Gewichtskraft fixierbar ist, weist die Montage- und Schutzvorrichtung keine Abhebesicherung auf.

Der Erfindung liegt deshalb die Aufgabe zugrunde, ein Wägezellenmodul mit seitlicher Anschlagsbegrenzung und einer Abhebesicherung so zu verbessern, daß dies ohne großen Montage- und Justieraufwand herstellbar ist und dies bei einfachster Ausgestaltung der Einzelteile.

Diese Aufgabe wird durch die im Patentanspruch 1 angegebene Erfindung gelöst. Weiterbildungen und vorteilhafte Ausführungsbeispiele der Erfindung sind in den abhängigen Ansprüchen angegeben.

Die Erfindung hat den Vorteil, daß durch die Kombination eines vertikalen Anschlagelementes an denen ein horizontales Paßstück angeorndet ist, sowohl die Funktion der Abhebesicherung als auch der horizontale Bewegungsweg begrenzbar ist. Weiterhin ist bei der Erfindung vorteilhaft, daß durch die Vorgabe des Luftspalts keine Justier- und Einstellaufgaben mehr erforderlich werden.

Ein weiterer Vorteil der Erfindung besteht noch darin, daß durch die Verwendung von kostengünstig herzustellenden Funktionselementen weitaus größere Abhebe- und Anschlagkräfte übertragbar sind als dies mit Normschrauben oder -muttern möglich wäre. Ein zusätzlicher Vorteil der Erfindung liegt in der Positionierung des Anschlagelementes. Dabei ist die Einstellung der Beweglichkeit in zwei rechtwinklig aufeinandnerliegenden Richtungskomponenten durch nur ein Funktionselement wesentlich vereinfacht. Dabei kann der Betreiber durch optische Kontrolle schnell eine Information über die momentan zugestandene Beweglichkeit erkennen, ohne daß hierfür aufwendige Meßverfahren notwendig wären.

Bei einer besonderen Ausbildungsart, bei der die vertikalen Anschlagelemente aus koaxial ineinander greifenden Rohrstücken bestehen, wird vorteilhafterweise gleichzeitig ein mechanischer Schutz der empfindlichen Wägetechnik erreicht.

Bei einer weiteren besonderen Ausbildung der Erfindung ist das Anschlagelement mit dem Paßstück zweiteilig ausgebildet, so daß vorteilhafterweise mit einem einzigen Befestigungselement, das horizontal verschiebbar an einer Montageplattform fixierbar ist, auf einfache Weise noch am Einsatzort Fertigungsungenauigkeiten ausgeglichen werden können.

Die Erfindung wird anhand eines Ausführungsbeispiels, das in der Zeichnung dargestellt ist, näher erläutert. Es zeigen:
- Fig. 1:: ein Wägezellenmodul in Seitenansicht mit V-förmigem vertikalen Anschlagelement;
- Fig. 2:: ein Wägezellenmodul in Draufsicht mit V-förmigem vertikalen Anschlagelement;
- Fig. 3:: ein Wägezellenmodul in Draufsicht mit V-förmigem Anschlagelement;
- Fig. 4:: ein Wägezellenmodul in Draufsicht mit T-förmigem Anschlagelement;
- Fig. 5:: ein Wägezellenmodul in Draufsicht mit H-förmigem Anschlagelement; und
- Fig. 6:: ein Wägezellenmodul mit rohrförmigen vertikalen Anschlagelementen.

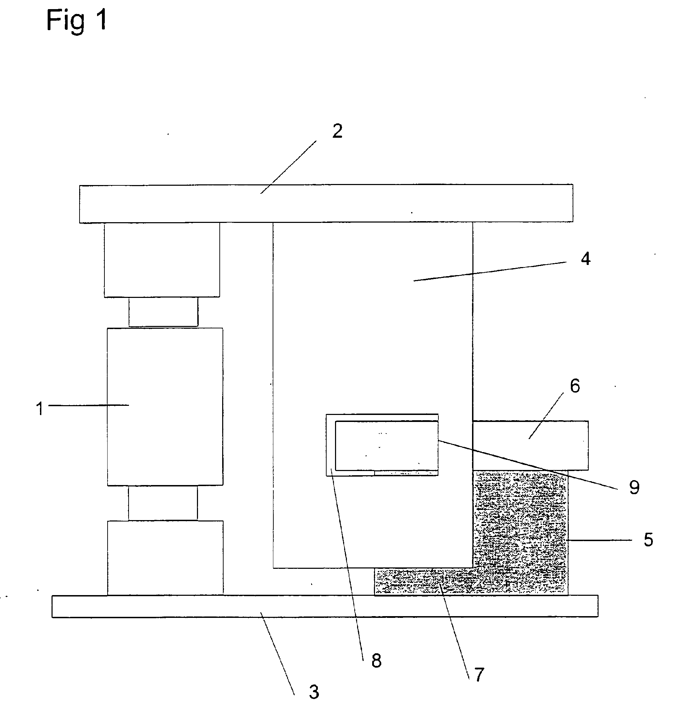

In Fig. 1 der Zeichnung ist ein Wägezellenmodul für eine Pendelstabwägezelle dargestellt, bei der zwischen zwei parallelen Montageplatten 2, 3 zwei Anschlagelemente 4, 5 angeordnet sind, die ineinander greifen und dadurch die horizontalen und vertikalen Bewegungswege begrenzen.

Für derartige Wägezellenmodule werden meist rotationssymmetrische Wägezellen, wie Pendelstab-, Biegering- oder rotationssymmetrische Biegebalkenwägezellen verwendet. In Fig. 1 ist eine Pendelstabwägezelle 1 vorgesehen, die aufgrund ihrer gekrümmten Lagerelemente bei seitlicher Auslenkung selbsttätig wieder in ihre Ausgangsposition zurückkehrt. Bei anderen Wägezellentypen werden meist Elastomerlager zur Krafteinleitung verwendet, bei denen durch das Elastomer die damit verbundene Montageplatte wieder in ihre Ausgangsposition bewegt wird.

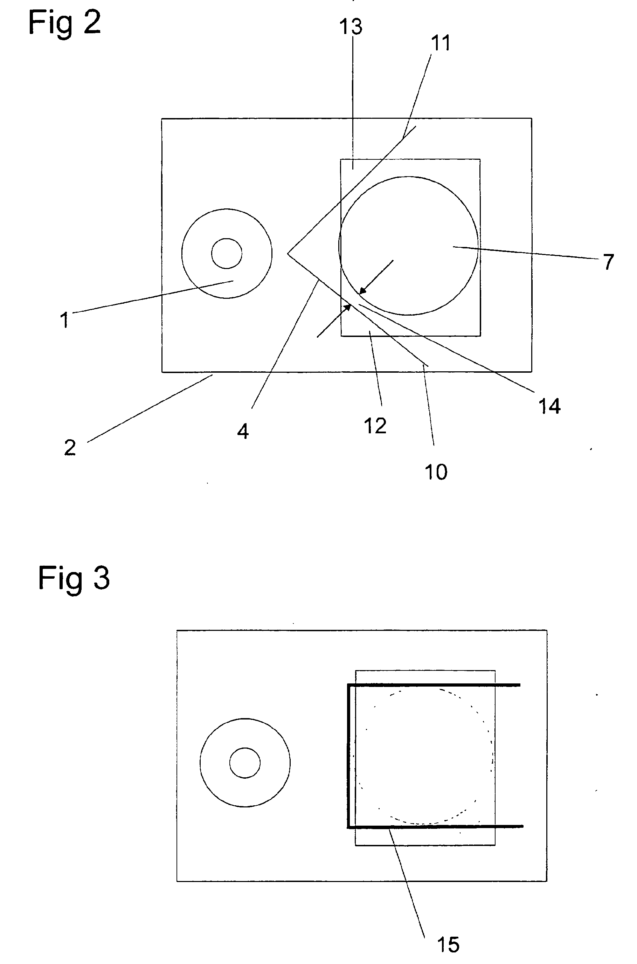

Die obere Montageplatte 2 besteht aus einem rechteckigen Stahlblech, auf dem oben der zu wiegende Behälter oder dergleichen befestigt wird. Vertikal nach unten ist an der oberen Montageplatte 2 ein V-förmiges Blechteil befestigt, das eines der Anschlagelemente darstellt. In diesem vertikalen Anschlagelement 4 sind in jedem der beiden Schenkel des V-Teils eine Aussparung 9 vorgesehen. Die genaue Ausrichtung des V-förmigen Teils des Anschlagelements 4 auf der Montageplatte 2 ist im einzelnen aus der Draufsicht nach Fig. 2 der Zeichnung ersichtlich. Danach ist das V-förmige Anschlagelement 4 mit seiner Spitze zur Wägezelle ausgerichtet und überdeckt mit seinen Schenkeln 10, 11 im wesentlichen den zentralen Bereich der Montageplatte 2, so daß durch diese Positionierung auch größere Überlasten vorteilhaft aufgenommen werden können.

Im Bereich der geöffneten Schenkel 10, 11 ist ein weiteres vertikales Anschlagelement 5 angeordnet, das im wesentlichen aus zwei einfach herzustellenden Funktionselementen besteht. Eines dieser Funktionselemente ist als Rundklotz 7 ausgebildet, der auf der unteren Montageplatte 3 befestigt ist. Darauf ist eine rechteckige Anschlagplatte 6 befestigt, die mit den zwei Eckbereichen 12, 13 in die Aussparungen 9 als Paßstücke hineinragen. Dabei ist die Anschlagplatte 6 so ausgebildet und angeordnet, daß zwischen den Paßstücken 12, 13 und den Aussparungen 9 ein vorgegebener Luftspalt 8 verbleibt, durch den sowohl ein vertikaler als auch ein horizontaler Bewegungsbereich begrenzt wird. Für derartige Luftspalte 8 sind Bewegungsbereiche von 1 bis 5 mm vorgesehen, die in der Regel keine aufwendige Justierung benötigen. Durch Begrenzung der beiden Bewegungsbereiche wird gleichzeitig eine Abhebesicherung als auch eine Begrenzung des Pendelweges erreicht, der bei übermäßiger Bewegung des Behälters oder ähnlichen Geräten notwendig ist. Im montierten Zustand kann durch Beobachtung des Luftspalts auf vorteilhafte Weise die Seitenabweichung als auch die Höhenabweichung von einem vorgesehenen Zustand kontrolliert werden.

Der Rundklotz 7 ist symmetrisch zwischen den Schenkeln 10, 11 des oberen Anschlagelements 4 angeordnet, so daß auch dieser gleichzeitig den horizontalen Bewegungsbereich in zwei Richtungen begrenzen kann. Dazu wird zwischen den beiden Schenkeln 10, 11 und dem Rundklotz 7 ebenfalls ein vorgegebener Luftspalt 14 vorgesehen, der zusätzlich oder ausschließlich den horizontalen Bewegungsbereich in mindestens drei um 90 ° verschiedene Richtungen begrenzt. Durch diese einfach ausgebildeten Funktionselemente 7, 6 können sehr große Anschlagkräfte aufgenommen werden, ohne daß aufwendige Konstruktionselemente oder groß dimensionierte Anschlagschrauben erforderlich sind.

Die seitliche Begrenzung in die drei vorgesehenen Richtungen ist meist ausreichend, da die zu wiegenden Behälter in der Regel auf drei Wägezellenmodulen gelagert werden, wodurch eine Begrenzung in allen Bewegungsrichtungen erreichbar ist. Das untere Anschlagelement 5 kann fest oder lösbar miteinander und/oder mit der unteren Montageplatte 3 verbunden sein. Dabei hat sich in der Praxis eine gemeinsame Schraubverbindung mit der Montageplatte 3 als vorteilhaft erwiesen, wobei durch entsprechend groß dimensionierte Bohrungen und vorgegebene Unterlegscheiben alle Teile in der vorgesehenen Position zum oberen Anschlagelement 4 und dessen Aussparung 9 fixierbar sind. Das untere Anschlagelement 5 kann auch aus einem eckigen Klotz oder aus einem Rohr vorgesehen sein, das mit einer runden Anschlagplatte 6 verbunden ist. Die Länge der beiden vertikalen Anschlagelemente 4, 5 muß so bemessen sein, daß sich beide wenigstens um die eingefaßte Aussparung 9 überlappen, wobei beide jeweils einen Luftspalt zur gegenüberliegenden Montageplatte 2, 3 einhalten müssen, der mindestens dem vorgesehenen vertikalen Bewegungsbereich entspricht.

In Fig. 3 der Zeichnung ist ein Wägezellenmodul dargestellt, das sich von dem Ausführungsbeispiel nach Fig. 1 lediglich durch die Ausbildung des oberen Anschlagelements unterscheidet. Dabei ist nach Fig. 3 der Zeichnung das obere Anschlagelement als U-förmiges Anschlagelement 15 ausgebildet und umschließt dadurch den Rundklotz 7 durch drei Anschlagflächen. Hierdurch sind gleichzeitig längere Aussparungsschlitze vorgesehen, die eine längere Führung in vertikaler Bewegungsrichtung ermöglichen.

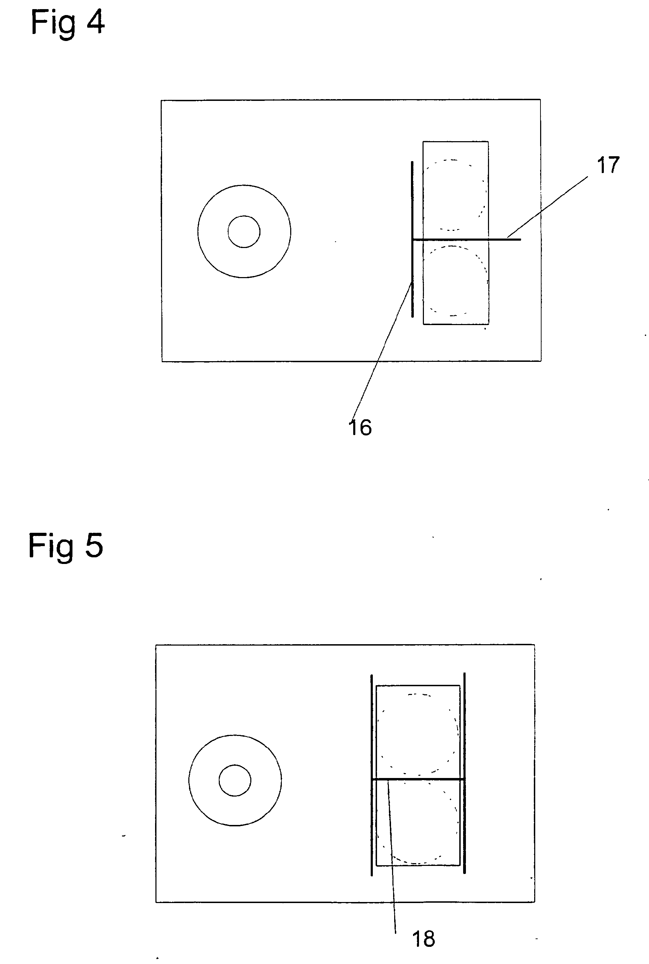

In Fig. 4 der Zeichnung ist ein Wägezellenmodul mit T-förmigen oberem Anschlagelement 16 vorgesehen. Das untere Anschlagelement ist dabei durch zwei Rundklötze ausgebildet, an dem eine beide Rundklötze überstreichende Anschlagplatte befestigt ist. Die Aussparung ist im mittleren T-Stück 17 angeordnet und gewährleistet dadurch eine vorteilhafte Begrenzung des horizontalen Bewegungsbereichs auch bei einer rotatorischen Bewegung.

In Fig. 5 der Zeichnung ist ein Wägezellenmodul mit einem H-förmigen oberen Anschlagelement 18 dargestellt. Hierbei sind wie beim Ausführungsbeispiel nach Fig. 4 zwei Rundklötze mit verlängerter Anschlagplatte vorgesehen. Dadurch wird in vorteilhafter Weise der Bewegungsbereich in alle Bewegungsrichtungen und auch bei einer Rotationsbewegung begrenzt.

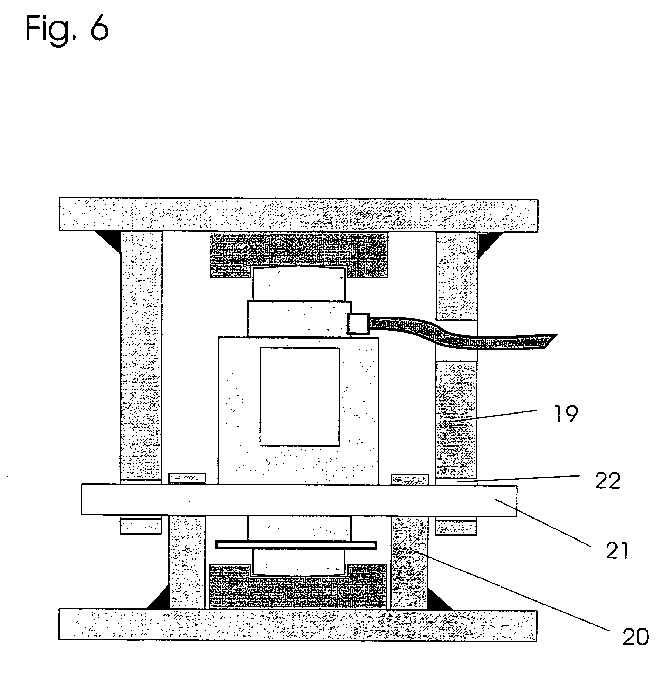

In Fig. 6 der Zeichnung ist ein Wägezellenmodul dargestellt, das ebenfalls aus zwei Montageplatten und dazwischen angeordneter Pendelhubwägezelle besteht. Dabei ist das obere Anschlagelement als Rundrohr 19 ausgebildet, das die Wägezelle umgibt. Das untere Anschlagelement ist ebenfalls als Rundrohr 20 ausgebildet, das in das obere Rundrohr 19 hineinragt, wobei sich beide Rohre koaxial umgeben und zwischen ihnen ein vorgegebener Luftspalt vorgesehen ist, der den horizontalen Bewegungsbereich in alle Richtungen begrenzt. Die Anschlagelemente 19, 20 können auch aus eckigen, ovalen oder davon abweichenden Rohrformen gebildet sein.

Im oberen Anschlagelement 19 ist in horizontaler Richtung eine Aussparung 22 vorgesehen, in die eine horizontale Anschlagplatte 21 als Paßstück hineinragt, die am unteren Anschlagelement 20 befestigt ist. Dabei ist zwischen der Aussparung 22 und der Anschlagplatte 21 ein vorgegebener Luftspalt vorgesehen, der eine Abhebesicherung und einen vertikalen Anschlag als Überlastsicherung darstellt. Durch diesen Anschlag 21 wird gleichzeitig auch eine Rotationsbewegung verhindert oder in ihrem Bereich durch vorgegebene Luftspalte begrenzt. Die Anschlagplatte 21 ist mindestens nach einer horizontalen Seite wie ein Paßstück ausgebildet, das in die Aussparung 22 des oberen Anschlagelementes 19 hineinragt. Bei einer derartigen Ausführung mit rohrförmigen Anschlagelementen können auch mehrere Anschlagplatten 21 vorgesehen werden, sofern größere Kippmomente oder Überlastkräfte aufgenommen werden sollen.

## Patentansprüche

1. Modul zur Aufnahme einer Wägezelle (1) mit zwei parallelen Montageplatten (2,3), zwischen denen eine Wägezelle (1) angeordnet ist, wobei an den Montageplatten (2,3) Anschlagelemente (4; 5, 6, 19, 20, 21) zur Begrenzung einer Horizontal- und einer
Vertikalverschiebung vorgesehen sind, **dadurch gekennzeichnet, daß** die Anschlagelemente (4, 5, 6, 19, 20, 21) aus mindestens einem ersten vertikal zu den
Montageplatten (2,3) angeordneten Anschlagelement (4, 19) bestehen, das mit mindestens einer Aussparung (9, 22) versehen ist, in die mindestens ein horizontal zu den Montageplatten (2,3) angeordnetes Paßstück (6, 21) unter Belassung eines vorgesehenen Luftspaltes (8) eingreift, das an einem weiteren vertikal zu den Montageplatten (2,3) angeordneten Anschlagelement (5, 20) befestigt ist, wobei beide vertikal zu den Montageplatten (2,3) angeordneten Anschlagelemente (4, 5, 19, 20) mit jeweils einer anderen Montageplatte (2, 3) verbunden sind.

2. Modul nach Anspruch 1, **dadurch gekennzeichnet, daß** die vertikalen Anschlagelemente (4, 7, 15, 16, 18, 19, 20) aus flachen, runden, V-förmigen, U-förmigen, T-förmigen und/oder H-förmigen Funktionslemeneten gebildet sind.

3. Modul nach Anspruch 1 oder Anspruch 2, **dadurch gekennzeichnet, daß** das Paßstück (6,21) als flaches, rundes, eckiges, quaderförmiges Funktionselement ausgebildet ist, durch das mindestens der vertikale Bewegungsbereich begrenzbar ist.

4. Modul nach einem der vorhergehenden Ansprüche, **dadurch gekennzeichnet, daß** eines der mit einer Montageplatte (3) verbundenen Anschlagelemente (5, 20) mindestens aus zwei Funktionselementen besteht, wobei mindestens ein Element (20, 7) vertikal zu den Montageplatten (2,3) und mindestens ein anderes Element (6, 21) horizontal zu den Montageplatten (2,3) ausgerichtet ist, wobei das horizontal zu den Montageplatten (2,3) ausgerichtete Element (6, 21) als Paßstück ausgebildet ist.

5. Modul nach Anspruch 4, **dadurch gekennzeichnet, daß** das vertikal zu den Montageplatten (2,3) angeordnete Element (20, 7) als Rundklotz (7), eckiger Klotz, Rundrohr, Vierkantrohr, Mehrkantrohr oder in einer davon abgewandelten Form ausgebildet ist.

6. Modul nach Anspruch 4, **dadurch gekennzeichnet, daß** mindestens eines der Elemente (7, 20; 6, 21) in vorgegebenem Abstand zur Aussparung (9, 22) und/oder zum gegenüberliegenden Anschlagelement (4, 20) fixierbar ist.

7. Modul nach einem der vorhergehenden Ansprüche, **dadurch gekennzeichnet, daß** eines der mit einer Montageplatte (2) verbundenen Anschlagelemente (4, 19) mindestens eine Aussparung (9, 22) enthält, die quadratisch, rechteckig oder rund ausgebildet ist, wobei dessen Querschnitt um mindestens den vorgesehenen Luftspalt (8) größer ist als der Querschnitt des Paßstücks (6, 21).

## Claims

1. Module for receiving a load cell (1) with two parallel mounting plates (2, 3), between which a load cell (1) is arranged, wherein stop elements (4, 5, 6, 19, 20, 21) are provided on the mounting plates (2, 3) to restrict a horizontal and a vertical displacement, **characterised in that** the stop elements (4, 5, 6, 19, 20, 21) comprise at least a first stop element (4, 19), which is arranged vertically to the mounting plates (2, 3) and is provided with at least one recess (9, 22), into which at least one fitting piece (6, 21) arranged horizontally to the mounting plates (2, 3) engages leaving a provided air gap (8), said fitting piece being fastened to a further stop element (5, 20) arranged vertically to the mounting plates (2, 3), wherein both stop elements (4, 5,19, 20) arranged vertically to the mounting plates (2, 3) are connected respectively to a different mounting plate (2, 3).

2. Module according to Claim 1, **characterised in that** the vertical stop elements (4, 7, 15, 16, 18, 19, 20) are formed from flat, round, V-shaped, U-shaped, T-shaped and/or H-shaped functional elements.

3. Module according to Claim 1 or Claim 2, **characterised in that** the fitting piece (6, 21) is configured as a flat, round, angular, cuboidal functional element, through which at least the vertical movement range can be restricted.

4. Module according to one of the preceding claims, **characterised in that** one of the stop elements (5, 20) connected to a mounting plate (3) comprises at least two functional elements, wherein at least one element (20, 7) is oriented vertically to the mounting plates (2, 3) and at least one other element (6, 21) is oriented horizontally to the mounting plates (2, 3), wherein the element (6, 21) oriented horizontally to the mounting plates (2, 3) is configured as a fitting piece.

5. Module according to Claim 4, **characterised in that** the element (20, 7) arranged vertically to the mounting plates (2, 3) is configured as a round block (7), angular block, round tube, rectangular tube, polygonal tube or in a shape modified therefrom.

6. Module according to Claim 4, **characterised in that** at least one of the elements (7, 20; 6, 21) can be secured at a predetermined spacing from the recess (9, 22) and/or from the opposite stop element (4, 20).

7. Module according to one of the preceding claims, **characterised in that** one of the stop elements (4, 19) connected to a mounting plate (2) contains at least one recess (9, 22), which is square, rectangular or round in configuration, wherein its cross-section is larger than the cross-section of the fitting piece (6, 21) by at least the provided air gap (8).

## Revendications

1. Module destiné au montage d'une cellule de pesage (1) avec deux plaques de montage parallèles (2,3) entre lesquelles est disposée une cellule de pesage (1), et où des éléments de butée (4, 5, 6, 19, 20, 21) sont prévus sur les plaques de montage (2, 3) pour limiter une translation horizontale et une translation perpendiculaire, **caractérisé en ce que** les éléments de butée (4, 5, 6, 19, 20, 21) sont constitués par au moins un premier élément de butée perpendiculaire (4, 19) aux plaques de montage (2, 3) pourvu d'au moins une réservation (9, 22) dans laquelle s'engage une pièce d'ajustage (6, 21) disposée parallèlement aux plaques de montage (2, 3) tout en ménageant un écartement prévu (8), et fixée à un autre élément de butée (5, 20) disposé perpendiculairement aux plaques de montage (2, 3), et où les deux éléments de butée (4, 5, 19, 20) disposés perpendiculairement aux plaques de montage (2, 3) sont respectivement liaisonnés avec une autre plaque de montage (2, 3).

2. Module conforme à la revendication 1, **caractérisé en ce que** les éléments de butée perpendiculaire (4, 7, 15, 16, 18, 19, 20) sont composés d'éléments fonctionnels plats, circulaires, en forme de V, en forme de U, en forme de T et/ou en forme de H.

3. Module conforme à la revendication 1 ou à la revendication 2, **caractérisé en ce que** la pièce d'ajustage (6, 21) est façonnée en élément fonctionnel plat, circulaire, anguleux ou présentant la forme d'un parallélépipède rectangle, afin qu'il soit au moins limité dans son mouvement vertical.

4. Module conforme à l'une des revendications précédentes, **caractérisé en ce que** l'un des éléments de butée (5, 20) liaisonné avec une plaque de montage (3) est constitué d'au moins deux éléments fonctionnels, dont un élément (20, 7) au moins est perpendiculaire aux plaques de montage (2, 3) et au moins un autre élément (6, 21) est orienté parallèlement aux plaques de montage (2, 3), et où l'élément (6, 21) disposé parallèlement aux plaques de montage (2, 3) est façonné en tant que pièce d'ajustage.

5. Module conforme à la revendication 4, **caractérisé en ce que** l'élément (20, 7) disposé perpendiculairement aux plaques de montage (2, 3), est façonné en tant qu'un bloc circulaire (cylindre plat) (7), bloc prismatique, tube de section ronde, tube de section polygonale ou de l'une des formes qui en dérivent.

6. Module conforme à la revendication 4, **caractérisé en ce que** au moins l'un des éléments (7, 20 ; 6, 21) est fixable à une distance prédéterminée par rapport à la réservation (9, 22) et/ou à l'élément de butée (4, 20) situé du côté opposé.

7. Module conforme à l'une des revendications précédentes, **caractérisé en ce que** l'un des éléments de butée (4, 19) liaisonné avec l'une des plaques de montage (2) est pourvu d'une réservation (9, 22) de forme carrée, rectangulaire ou circulaire, dont la section est supérieure à la section de la pièce d'ajustage (6, 21), d'au moins la dimension de l'écartement (8) prévu.
